# EUROPÄISCHE PATENTSCHRIFT

(11) **EP 1 171 730 B1**
(45) Veröffentlichungstag und Bekanntmachung des Hinweises auf die Patenterteilung: **26.02.2003**
(21) Anmeldenummer: 00922641.6
(22) Anmeldetag: 15.04.2000
(51) Int. Cl.: F16H 61/00

(54) **UMSCHLINGUNGSGETRIEBE**
CONTINUOUSLY VARIABLE TRANSMISSION
TRANSMISSION A VARIATION CONTINUE

(30) Priorität: 23.04.1999 DE 19918541
(43) Veröffentlichungstag der Anmeldung: 16.01.2002
(73) Patentinhaber: ZF FRIEDRICHSHAFEN Aktiengesellschaft, 88038 Friedrichshafen (DE)
(72) Erfinder: PIEPENBRINK, Andreas, D-88709 Meersburg (DE); FESSLER, Bernd, D-88079 Kressbronn (DE); RUNGE, Wolfgang, D-88214 Ravensburg (DE)
(86) Internationale Anmeldenummer: EP0003445
(87) Internationale Veröffentlichungsnummer: WO00065253

(56) Entgegenhaltungen:
- EP-A- 0 286 924
- WO-A-00/12918
- WO-A-91/14116
- DE-A- 4 131 931
- DE-A- 4 331 266
- US-A- 5 108 348

## Beschreibung

Die Erfindung betrifft ein Umschlingungsgetriebe für ein Kraftfahrzeug mit einem Variator, welcher einen Primärscheibensatz und einen Sekundärscheibensatz mit einem diese umschlingenden Drehmomentübertragungsglied aufweist, wobei eine Primär-Kegelscheibe und eine Sekundär-Kegelscheibe, welche hydraulisch in axialer Richtung verschiebbar sind, zur geregelten Einstellung eines Druckes jeweils mit einem Ölvolumenstrom über eine elektrohydraulisch gesteuerte Druckversorgungseinrichtung beaufschlagbar sind.

Derartige auch als CVT(Continuously Variable Transmission)-Getriebe bezeichnete Umschlingungsgetriebe sind stufenlos verstellbare Automatgetriebe. Die stufenlose Verstellung wird durch axiale Verstellung der beiden verschiebbaren Kegelscheiben des Variators auf der Primärwelle und der Sekundärwelle erreicht, wodurch das Übersetzungsverhältnis zwischen einer kürzest möglichen Übersetzung (LOW) und einer längsten möglichen Übersetzung (overdrive, OD) geändert wird.

Um die notwendige Reibkraft an dem Drehmomentübertragungsglied, das im allgemeinen ein Schubgliederband ist, für die Übertragung des Motormomentes zu erzielen, ist stets ein definierter Anpreßdruck an den Kegelscheiben notwendig. Die Verstellung der Kegelscheiben geschieht durch das Aufbringen eines zusätzlichen Verstelldruckanteiles an einer der beiden verschiebbaren Kegelscheiben.

Bei aus der Praxis bekannten Ausführungen dieser Umschlingungsgetriebe ist als Druckversorgungseinrichtung an jeder verstellbaren Kegelscheibe jeweils ein Druckzylinder angeordnet, mit dem sowohl die stets notwendige Scheibenanpressung als auch die Kegelscheibenverstellung zur Übersetzungsänderung vorgenommen wird.

Dabei wird vollständig entkoppelt an den beiden Kegelscheiben ein Druck geregelt eingestellt und ein zur Verstellung des Variators notwendiger Volumenstrom ebenfalls unabhängig voneinander an den verschiebbaren Kegelscheiben zur Verfügung gestellt.

So wird beispielsweise bei einer Verstellung von dem Zustand LOW in Richtung des Zustandes OD mit einer längeren Übersetzung eine erste Kegelscheibe mit Ölvolumen beaufschlagt und ihre Volumenkammer befüllt. Gleichzeitig wird ein zweiter Volumenstrom aus einer zweiten Kegelscheibe an dem anderen Kegelscheibensatz in einen Öltank abgeführt.

Analog hierzu wird bei einer Verstellung des Variators von einem Zustand OD in Richtung der Übersetzung LOW die zweite Kegelscheibe befüllt, während der Volumenstrom aus der ersten Kegelscheibe in den Öltank abgeführt wird.

Da bei Umschlingungsgetrieben außer bei seltenen Konstantfahrsituationen eine ständige Übersetzungsänderung erfolgt, bedeutet dies, daß ständig Öl auf der Niederdruckseite entspannt werden muß und in den Öltank verloren geht, während gleichzeitig Öl mit dem erforderlich hohen Druck auf der Hochdruckseite nachgefördert werden muß.

Dies hat den Nachteil, daß die Volumenstromverhältnisse dabei geometrisch stark nichtlinear sind und die notwendige Pumparbeit zur Gewährleistung einer hohen Verstelldynamik von entsprechend groß dimensionierten Pumpen durchgeführt werden muß. Der Gesamtwirkungsgrad wird dadurch deutlich negativ beeinflußt, und die Antriebsleistung des Motors ist durch die Pumpenleistung vermindert.

Aus der DE 41 31 931 ist ein Umschlingungsgetriebe bekannt, bei dem für die Scheibenanpressung der beiden verstellbaren Kegelscheiben des Variators jeweils ein Anpreßzylinder und für die Scheibenverstellung ein von dem Anpreßzylinder getrennter Verstellzylinder vorgesehen ist. Die Zylinderräume der beiden Anpreßzylinder sind dabei miteinander durch eine Ausgleichsleitung verbunden.

Da die Höhe des Anpreßdrucks zur Sicherstellung der Momentenübertragung am Variator dominant ist gegenüber dem Verstelldifferenzdruck, welcher zur Übersetzungsänderung nötig ist, läßt sich der Anpreßdruck mit großen Wirkflächen in beiden inneren Zylinderkammern und die Druckdifferenz zum Verstellen mit kleinen Wirkflächen realisieren. In den Verstellzylindern ändern sich bei einer Variatorverstellung die Volumina und das Öl geht in einen Öltank verloren. In den Anpreßdruckzylindern ändern sich jedoch die Volumina nicht, und das Öl wird zwischen den Kammern nur ausgetauscht, womit es im System bleibt und nicht nachgefördert werden muß.

Diese bekannte Lösung ermöglicht durch die Mechanik der Doppel-Kegelscheiben mit äußeren Zylindern und miteinander verbundenen inneren Zylindern eine Reduzierung der hydraulischen Verluste bei einer Variatorverstellung. Konstruktiv ist diese Lösung aber aufwendig.

Der vorliegenden Erfindung liegt daher die Aufgabe zugrunde, ein Umschlingungsgetriebe mit einem Variator einfacher Bauart zu schaffen, bei dem hydraulische Leistungsverluste bei der Ansteuerung des Variators minimiert werden.

Erfindungsgemäß wird diese Aufgabe durch die in Patentanspruch 1 genannten Merkmale gelöst.

Durch die erfindungsgemäße Ausgestaltung des Umschlingungsgetriebes bzw. der Druckversorgungseinrichtung mit einem zwischen den Druckkammern der Primär-Kegelscheibe und der Sekundär-Kegelscheibe angeordneten Zylinder mit Kolben wird ein zu dem Variator parallel geschalteter, doppelt wirkender, schaltbarer Bypaßzylinder bereitgestellt, mittels dem der niederdruckseitige Volumenstrom, welcher zur Entspannung abzuführen ist, auf die jeweilige Hochdruckseite zurückgeführt wird.

Mit der erfindungsgemäßen Druckversorgungseinrichtung ist vorteilhafterweise eine Ölrückführung möglich, bei der das unter Druck stehende Öl einer Kegelscheibe des Variators, welches bei Verstellung normalerweise in der Tank fließen würde, in den Druckraum der unter meist höherem Druck stehenden weiteren Kegelscheibe geführt wird, ohne daß dazu aktive hydraulische Elemente wie z.B. Pumpen erforderlich sind.

Da der zur Aufbringung des Verstelldruckes notwendige Volumenstrom lediglich zwischen der Hochdruckseite und der Niederdruckseite des Variators hin und hergeschoben wird, muß dieser Volumenstrom nicht aus einem Ölsumpf gefördert werden, was zu einer spürbaren Verbesserung des Gesamtwirkungsgrades führt.

Neben dem Vorteil der Energieersparnis zeichnet sich die erfindungsgemäße Lösung auch durch eine äußerst einfache und kostengünstige Konstruktion aus, welche sogar als eine Art Anbaulösung zu bekannten hydraulischen Ansteuerungen von Kegelscheibensätzen eines Variators Verwendung finden kann, da ein Variator mit üblichen Einfachzylindern konstruktiv nicht verändert werden muß.

Des weiteren trägt zur einfachen konstruktiven Bauart bei, daß keine zusätzliche Sensorik oder eine elektronische Beschaltung der verwendeten Bauteile erforderlich ist.

Zur Realisierung der erfindungsgemäßen Lösung und der damit verbundenen Erzielung einer Minimierung an hydraulischen Leistungs- bzw. Ölverlusten ist es in der Regel auch nicht erforderlich, ein vorhandenes herkömmliches hydraulisches System zu verändern.

Vorteilhafterweise ermöglicht es die Erfindung, maximale Verstellgradienten d.h. Übersetzungsänderungen pro Zeiteinheit bei einem minimalem Ölverbrauch einzuhalten, wobei der Ölverbrauch des Variators zu einem vernachlässigbaren Anteil bei der hydraulischen Systemauslegung wird.

Gleichzeitig ist gewährleistet, daß der Druck- und Verstellarbeitsbereich des Variators in keiner Weise durch die Erfindung eingeschränkt oder verändert wird.

Die vorliegende Erfindung erfüllt somit wichtige Rahmenbedingungen insbesondere für einen Serieneinsatz bei stufenlosen Automatgetrieben.

Vorteilhafte Ausgestaltungen und Weiterbildungen der Erfindung ergeben sich aus den Unteransprüchen und aus den nachfolgend anhand der Zeichnung prinzipmäßig beschriebenen Ausführungsbeispielen.
Es zeigt:
- Fig. 1: eine schematische Prinzipdarstellung eines Variators eines Umschlingungsgetriebes mit einer erfindungsgemäßen Druckversorgungseinrichtung und
- Fig. 2: eine schematische Prinzipdarstellung des Variators nach Fig. 1 mit einer alternativen Druckversorgungseinrichtung.

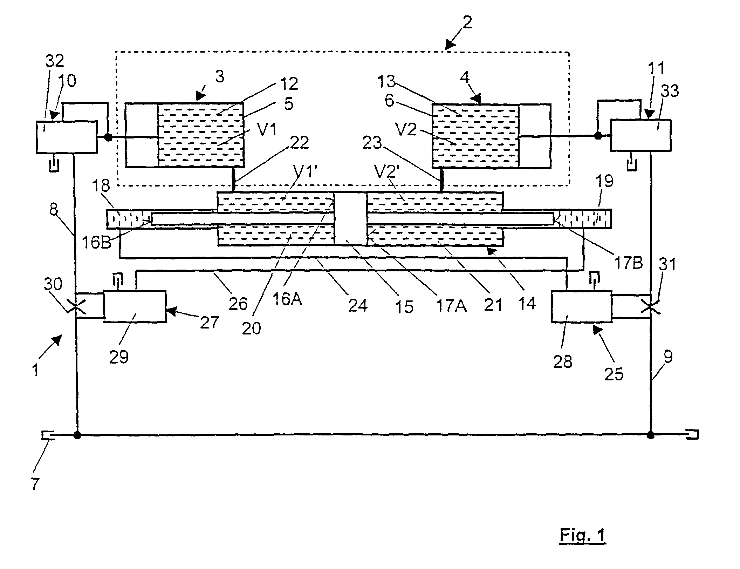

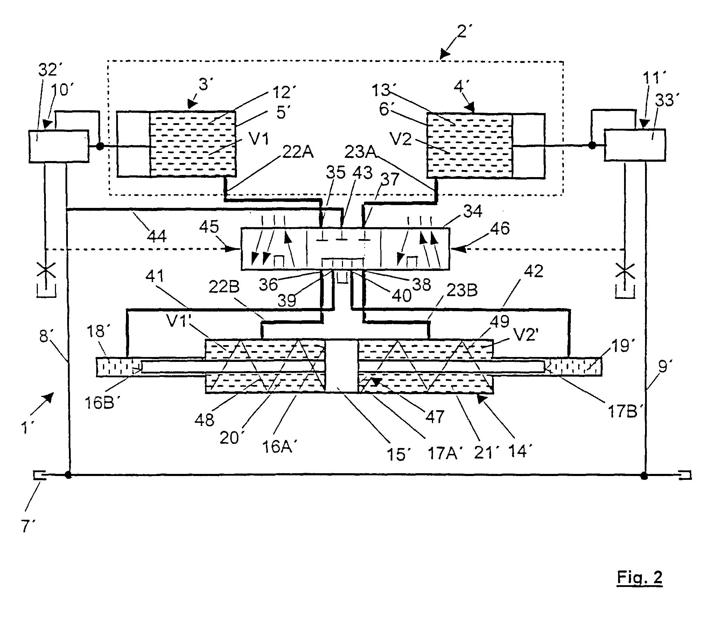

Bezug nehmend auf die Fig. 1 und 2 ist jeweils äußerst schematisiert eine elektrohydraulisch gesteuerte Druckversorgungseinrichtung 1 eines Variators 2 eines Umschlingungsgetriebes für ein Kraftfahrzeug dargestellt.

Der Variator 2 weist einen nur schematisch angedeuteten Primärscheibensatz 3 und einen Sekundärscheibensatz 4 auf, wobei eine Primär-Kegelscheibe 5 des Primärscheibensatzes 3 und eine Sekundär-Kegelscheibe 6 des Sekundärscheibensatzes 4 zur Verstellung des Variators 2 hydraulisch in axialer Richtung verschiebbar sind.

Die Kegelscheiben 5, 6 werden zur geregelten Einstellung eines Druckes und Ansteuerung des Variators 2 jeweils mit einem Ölvolumenstrom aus einer Druckquelle 7, welche ein Öltank oder ein Ölsumpf darstellt, beaufschlagt.

Hierzu werden die Ölvolumenströme an die verschiebbaren Kegelscheiben 5, 6 jeweils über eine Druckleitung 8, 9 mit einer Druckregeleinrichtung 10, 11 und eine Druckkammer 12 der Primär-Kegelscheibe 5 mit variierbarem Volumen V1 oder eine Druckkammer 13 der Sekundär-Kegelscheibe 6 mit variierbarem Volumen V2 aus dem Öltank 7 gefördert.

Parallel zu dem Variator 2 ist zur Ölrückführung von einer Niederdruckseite zu einer Hochdruckseite bei dessen Verstellung ein hydraulisch beschalteter Zylinder 14 mit einem darin angeordneten Kolben 15 vorgesehen. An seinen Wirkseiten 16A, 16B und 17A, 17B ist der Kolben 15 als Stufenkolben ausgebildet, wobei er zu seiner hydraulischen Schaltung zwischen zwei mit Druck beaufschlagbaren Arbeitskammern 18, 19 gelagert ist. Des weiteren trennt der Kolben 15 eine der Druckkammer 12 der Primär-Kegelscheibe 5 zugeordnete Primärkammer 20 mit Volumen V1' von einer der Druckkammer 13 der Sekundär-Kegelscheibe 6 zugeordneten Sekundärkammer 21 mit Volumen V2'.

Fig. 1 zeigt eine Ausführung, bei der die Druckkammer 12 der Primär-Kegelscheibe 5 mit der Primärkammer 20 und die Druckkammer 13 der Sekundär-Kegelscheibe 6 mit der Sekundärkammer 21 des Zylinders 14 über eine Leitung 22 bzw. 23 dauerhaft verbunden ist, so daß zwischen den Volumina V1 und V1' bzw. zwischen V2 und V2'stets gleiches Druckniveau herrscht.

Die Primärkammer 20 und die Sekundärkammer 21 des Zylinders 14 sind von den Arbeitskammern 18, 19 separiert.

Die primärseitige Arbeitskammer 18 ist über eine Leitung 24 und eine Druckregeleinrichtung 25 mit der zu der Druckkammer 13 der Sekundär-Kegelscheibe 6 führenden Druckleitung 9 verbunden, während die sekundärseitige Arbeitskammer 19 über eine Leitung 26 und eine Druckregeleinrichtung 27 mit der zu der Druckkammer 12 der Primär-Kegelscheibe 5 führenden Druckleitung 8 verbunden ist.

Die Druckregeleinrichtungen 25, 27 weisen dabei jeweils ein Mengenregelventil 28 bzw. 29 und eine Blende 30 bzw. 31 auf, wobei die Blenden 30, 31 in der zu der jeweiligen Druckkammer 12 oder 13 führenden Druckleitung 8 bzw. 9 angeordnet sind und bei Überschreiten eines vordefinierten Ölvolumenstromes derart umschalten, daß Öl über das zugeordnete Mengenregelventil 28 bzw. 29 zu der primärseitigen Arbeitskammer 18 oder der sekundärseitigen Arbeitskammer 19 des Zylinders 14 strömt.

Betrachtet man die Funktionsweise näher, so erfolgt die Ansteuerung des Variators 2 über die in den zu den Druckkammern 12, 13 führenden Druckleitungen 8, 9 angeordneten Druckregeleinrichtungen 10 und 11, welche jeweils mit einem Druckregelventil 32 bzw. 33 ausgebildet sind. Die Ansteuerung ist dabei derart vorgesehen, daß der an den Kegelscheiben 5, 6 anliegende Anpreßdruck individuell über das zugeordnete Druckregelventil 32 bzw. 33 einstellbar ist.

Über die Mengenregelventile 28 und 29, welche in den zu den Druckregelventilen 32, 33 führenden Druckleitungen 8, 9 eingebaut sind, wird bei Überschreitung einer einstellbaren Ölmenge die jeweils andere Seite des Zylinders 14 mit Hauptdruck beaufschlagt, so daß bei einer Verstellung des Variators 2 das aus einer der Druckkammern 12, 13 der Kegelscheiben 5, 6 gepreßte Öl in die mit ihr verbundene Primärkammer 20 oder Sekundärkammer 21 des Zylinder 14 strömt. Dabei wird ein äquivalentes Ölvolumen der auf der anderen Seite des Kolbens 15 liegenden Primärkammer 20 oder Sekundärkammer 21 in die Druckkammer 12 oder 13 der ihr zugeordneten Kegelscheibe gedrückt.

Beispielsweise wird bei einer Verstellung des Variators 2 von LOW nach OD Öl in die Druckkammer 12 der Primär-Kegelscheibe 5 gefördert und Öl aus der Druckkammer 13 der Sekundär-Kegelscheibe 6 abgelassen. Das primärseitige Mengenregelventil 29 schaltet dabei den Hauptdruck auf die Sekundärseite des Zylinders 14, dessen Kolben 15 daraufhin entgegen der primärseitigen Arbeitskammer 18 und der Primärkammer 20 verschoben wird, wobei das an der Sekundär-Kegelscheibe 6 anliegende Öl in die Sekundärkammer 21 des Zylinders 14 gelangt, während primärseitig das Ölvolumen, welches sekundärseitig in den Zylinder 14 eingespeist wird, in die Druckkammer 12 der Primär-Kegelscheibe 5 geschoben wird. Weiteres beispielsweise wegen etwaiger unsymmetrischer geometrischer Verstellverhältnisse für die Anpressung der Primär-Kegelscheibe 5 benötigtes Öl wird über das primärseitige Druckregelventil 32 und deren Druckleitung 8 nachgefördert.

Mit der beschriebenen hydraulischen Beschaltung des Zylinders 14 wird dieser gezwungen, das Öl der jeweils infolge der gewünschten Übersetzungsänderung zu verkleinernden Druckkammer 12 oder 13 der Primär-Kegelscheibe 5 bzw. Sekundär-Kegelscheibe 6 zu der anderen Kegelscheibe zu schieben. Da der von der Niederdruckseite zu der Hochdruckseite geführte Ölvolumenstrom dem zusätzlich zu dem Anpreßdruck notwendigen Verstelldruck entspricht, realisiert das System eine maximal mögliche Ölrückspeisung.

Die Ausführung nach Fig. 2 zeigt ebenfalls eine Druckversorgungseinrichtung 1' für einen Variator 2' mit einem Primärscheibensatz 3' mit Primär-Kegelscheibe 5' und zugehöriger Druckkammer 12' sowie einem Sekundärscheibensatz 4' mit Sekundär-Kegelscheibe 6' und zugehöriger Druckkammer 13', welche mit Öl aus einer Druckquelle 7' über Druckleitungen 8', 9' und darin angeordnete Druckregeleinrichtungen 10', 11' mit Druckregelventilen 32', 33' versorgt werden. Die Druckversorgungseinrichtung 1' arbeitet nach dem gleichen Prinzip wie in Fig. 1.

So ist wie in Fig. 1 zur Ölrückführung von einer Niederdruckseite zu einer Hochdruckseite des Variators 2' ein hydraulisch beschalteter Zylinder 14' mit einem Kolben 15' vorgesehen, der an seinen Wirkseiten 16A', 16B' und 17A', 17B' als Stufenkolben ausgebildet ist, wobei er zwischen zwei Arbeitskammern 18', 19' gelagert ist und eine der Druckkammer 12' der Primär-Kegelscheibe 5' zugeordnete Primärkammer 20' von einer der Druckkammer 13' der Sekundär-Kegelscheibe 6' zugeordneten Sekundärkammer 21' trennt.

Im Unterschied zu der in der Fig. 1 gezeigten Ausführung, bei der der Zylinder 14 und der Kolben 15 ständig aktiv sind, ist der in Fig. 2 ersichtliche Zylinder 14' bei Bedarf, d. h. bei einer Verstellung des Variators 2', zuschaltbar.

Hierzu ist ein Schaltventil 34 vorgesehen, das Anschlüsse 35, 36 für eine zu der Druckkammer 12' der Primär-Kegelscheibe 5' führende Leitung 22A und eine zu der Primärkammer 20' führende Leitung 22B, und Anschlüsse 37, 38 für eine zu der Druckkammer 13' der Sekundär-Kegelscheibe 6' führende Leitung 23A und eine zu der Sekundärkammer 21' des Zylinders 14' führende Leitung 23B aufweist. Damit ist die Druckkammer 12' der Primär-Kegelscheibe 5' mit der Primärkammer 20' und die Druckkammer 13' der Sekundär-Kegelscheibe 6' mit der Sekundärkammer 21 über das Schaltventil 34 verbindbar.

Des weiteren sind an dem Schaltventil 34 Anschlüsse 39, 40 für zu den Arbeitskammern 18', 19' des Kolbens 15' führende Leitungen 41, 42 vorgesehen, welche mit einer von einem Anschluß 43 des Schaltventils 34 zu der Hauptdruckleitung 8' führenden Leitung 44 verbindbar sind.

Das Schaltventil 34 ist über Steueranschlüsse 45, 46 hydraulisch in drei Stellungen schaltbar, wobei eine erste Stellung als Ruhestellung, eine zweite Stellung zur Öldruckführung von der Primärseite zur Sekundärseite und eine dritte Stellung zur Öldruckführung von der Sekundärseite zur Primärseite vorgesehen ist.

Wie in der Ausführung nach Fig. 1 arbeitet der Zylinder 14' mit seiner hydraulischen Beschaltung als hydrostatisches Getriebe, welches Druck bzw. den Ölvolumenstrom zur Verstellung der Kegelscheiben 5', 6' von der Seite mit dem gerade niedrigeren Druck an die gegenwärtige Hochdruckseite fördert, wobei das System nach Fig. 2 in eine Ruhestellung schaltbar ist.

In der Ruhestellung wird der Kolben 15' durch eine Federeinrichtung 47 mit zwei Federn 48 und 49, von denen eine Feder 48 in der Primärkammer 20' und die andere Feder 49 in der Sekundärkammer 21' vorgespannt angeordnet ist, in einer definierten Mittelstellung gehalten.

### Bezugszeichen

- 1, 1': Druckversorgungseinrichtung
- 2, 2': Variator
- 3, 3': Primärscheibensatz
- 4, 4': Sekundärscheibensatz
- 5, 5': Primär-Kegelscheibe
- 6, 6': Sekundär-Kegelscheibe
- 7, 7': Druckquelle, Öltank
- 8, 8': Druckleitung
- 9, 9': Druckleitung
- 10, 10': Druckregeleinrichtung
- 11, 11': Druckregeleinrichtung
- 12, 12': Druckkammer
- 13, 13': Druckkammer
- 14, 14': Zylinder
- 15, 15': Kolben, Stufenkolben
- 16A, 16A': Wirkseite des Kolbens
- 16B, 16B': Wirkseite des Kolbens
- 17A, 17A': Wirkseite des Kolbens
- 17B, 17B': Wirkseite des Kolbens
- 18, 18': Arbeitskammer des Zylinders
- 19, 19': Arbeitskammer des Zylinders
- 20, 20': Primärkammer
- 21, 21': Sekundärkammer
- 22: Leitung
- 22A: Leitung
- 22B: Leitung
- 23: Leitung
- 23A: Leitung
- 23B: Leitung
- 24: Leitung
- 25: Druckregeleinrichtung
- 26: Leitung
- 27: Druckregeleinrichtung
- 28: Mengenregelventil
- 29: Mengenregelventil
- 30: Blende
- 31: Blende
- 32, 32': Druckregelventil
- 33, 33': Druckregelventil
- 34: Schaltventil
- 35: Anschluß Schaltventil
- 36: Anschluß Schaltventil
- 37: Anschluß Schaltventil
- 38: Anschluß Schaltventil
- 39: Anschluß Schaltventil
- 40: Anschluß Schaltventil
- 41: Leitung
- 42: Leitung
- 43: Anschluß Schaltventil
- 44: Leitung
- 45: Steueranschluß
- 46: Steueranschluß
- 47: Federeinrichtung
- 48: Feder
- 49: Feder

- V1: Volumen Druckkammer der Primär-Kegelscheibe
- V1': Volumen Primärkammer
- V2: Volumen Druckkammer der Sekundär-Kegelscheibe
- V2': Volumen Sekundärkammer

## Patentansprüche

1. Umschlingungsgetriebe für ein Kraftfahrzeug mit einem einen Primärscheibensatz (3, 3') und einen Sekundärscheibensatz (4, 4') aufweisenden Variator (2, 2'), wobei eine Primär-Kegelscheibe (5, 5') und eine Sekundär-Kegelscheibe (6, 6'), welche hydraulisch in axialer Richtung verschiebbar sind, zur geregelten Einstellung eines Druckes jeweils mit einem Ölvolumenstrom über eine elektrohydraulisch gesteuerte Druckversorgungseinrichtung (1, 1') beaufschlagbar sind, **dadurch gekennzeichnet, daß** die Ölvolumenströme an die Kegelscheiben (5, 5', 6, 6') jeweils über eine Druckleitung (8, 8', 9, 9') mit wenigstens einer Druckregeleinrichtung (10, 10', 11, 11') und eine Druckkammer (12, 12', 13, 13') mit variierbarem Volumen (V1, V2) geführt sind, und die Druckkammer (12, 12') der Primär-Kegelscheibe (5, 5') mit einer Primärkammer (20, 20') und die Druckkammer (13, 13') der Sekundär-Kegelscheibe (6, 6') mit einer Sekundärkammer (21, 21') eines Zylinders (14, 14') verbindbar sind, in dem zwischen der Primärkammer (20, 20') und der Sekundärkammer (21, 21') ein schaltbarer Kolben (15, 15') zur Öldruckführung von einer Niederdruckseite zu einer Hochdruckseite des Variators (2, 2') bei dessen Verstellung angeordnet ist.

2. Umschlingungsgetriebe nach Anspruch 1, **dadurch gekennzeichnet, daß** der von der Niederdruckseite zu der Hochdruckseite des Variators (2, 2') über den Kolben (15, 15') geführte Öldruck einem zusätzlich zu einem Anpreßdruck notwendigen Verstelldruck entspricht.

3. Umschlingungsgetriebe nach Anspruch 1 oder 2, **dadurch gekennzeichnet, daß** der Kolben (15, 15') an jeder seiner Wirkseiten (16A, 16A', 16B, 16B', 17A, 17A', 17B, 17B') als Stufenkolben ausgebildet ist, welcher zu seiner hydraulischen Schaltung zwischen zwei mit Druck beaufschlagbaren Arbeitskammern (18, 18', 19, 19') gelagert ist.

4. Umschlingungsgetriebe nach Anspruch 3, **dadurch gekennzeichnet, daß** die Druckkammer (12) der Primär-Kegelscheibe (5) mit der Primärkammer (20) und die Druckkammer (13) der Sekundär-Kegelscheibe (6) mit der Sekundärkammer (21) des Zylinders (14) dauerhaft verbunden ist.

5. Umschlingungsgetriebe nach Anspruch 3 oder 4, **dadurch gekennzeichnet, daß** die an die Primärkammer (20) grenzende Arbeitskammer (18) über eine Druckregeleinrichtung (25) mit der zu der Druckkammer (13) der Sekundär-Kegelscheibe (6) führenden Druckleitung (9) verbunden ist.

6. Umschlingungsgetriebe nach Anspruch 3, 4 oder 5, **dadurch gekennzeichnet, daß** die an die Sekundärkammer (21) grenzende Arbeitskammer (19) über eine Druckregeleinrichtung (27) mit der zu der Druckkammer (12) der Primär-Kegelscheibe (5) führenden Druckleitung (8) verbunden ist.

7. Umschlingungsgetriebe nach Anspruch 5 oder 6, **dadurch gekennzeichnet, daß** die Druckregeleinrichtung (1) ein Mengenregelventil (28, 29) aufweist.

8. Umschlingungsgetriebe nach Anspruch 7, **dadurch gekennzeichnet, daß** die Druckregeleinrichtung (1) eine Blende (30, 31) aufweist, welche in der zu der jeweiligen Druckkammer (12, 13) führenden Druckleitung (8, 9) angeordnet ist und bei Überschreiten eines vordefinierten Ölvolumenstromes derart umschaltet, daß Öl zu dem zugeordneten Mengenregelventil (28, 29) strömt.

9. Umschlingungsgetriebe nach Anspruch 3, **dadurch gekennzeichnet, daß** die Druckkammer (12') der Primär-Kegelscheibe (5') mit der Primärkammer (20') und die Druckkammer (13') der Sekundär-Kegelscheibe (6') mit der Sekundärkammer (21') des Zylinders (14') sowie die Arbeitskammern (18', 19') des Kolbens (15') mit wenigstens einer der zu den Druckkammern (12', 13') führenden Druckleitungen (8', 9') über ein Schaltventil (34) verbindbar sind.

10. Umschlingungsgetriebe nach Anspruch 9, **dadurch gekennzeichnet, daß** das Schaltventil (34) als 7/3-Wegeventil mit jeweils zu den Arbeitskammern (18', 19') des Kolbens (15') führenden Anschlüssen (39, 40), jeweils zu den Druckkammern (12', 13') der Primär-Kegelscheibe (5') und der Sekundär-Kegelscheibe (6') führenden Anschlüssen (35, 37), zu der Primärkammer (20') und der Sekundärkammer (21') führenden Anschlüssen (36, 38) und einem Anschluß (43) für eine von der Druckleitung (8'), welche zu der Druckkammer (12') der Primär-Kegelscheibe (5') führt, abzweigende Leitung (44) ausgebildet ist, wobei eine erste Stellung als Ruhestellung, eine zweite Stellung zur Öldruckführung von der Primärseite zur Sekundärseite und eine dritte Stellung zur Öldruckführung von der Sekundärseite zur Primärseite vorgesehen ist.

11. Umschlingungsgetriebe nach Anspruch 9 oder 10, **dadurch gekennzeichnet, daß** in dem Zylinder (14') eine Federeinrichtung (47) angeordnet ist, welche den Kolben (15') in einem Ruhezustand wenigstens annähernd in einer Mittelstellung hält.

12. Umschlingungsgetriebe nach Anspruch 11, **dadurch gekennzeichnet, daß** die Federeinrichtung (47) mit zwei Federn (48, 49) ausgebildet ist, von denen eine in der in der Primärkammer (20') und die andere in der Sekundärkammer (21') vorgespannt angeordnet ist.

## Claims

1. Continuously variable transmission for a motor vehicle, which has a variator (2, 2') with a primary disk set (3, 3') and a secondary disk set (4, 4'), in which a primary taper disk (5, 5') and a secondary taper disk (6, 6') that are hydraulically displaceable in an axial direction can each be subjected to a volume flow of oil by means of an electrohydraulically controlled pressure supply device (1, 1') in order to adjust a pressure in a regulated manner, **characterized in that** the volume flows of oil are each conducted to the taper disks (5, 5', 6, 6') via a pressure line (8, 8', 9, 9') with at least one pressure regulating device (10, 10', 11, 11') and a pressure chamber (12, 12', 13, 13') with a variable volume (V1, V2) and **in that** the pressure chamber (12, 12') of the primary taper disk (5, 5') can be connected to a primary chamber (20, 20') and the pressure chamber (13, 13') of the secondary taper disk (6, 6') can be connected to a secondary chamber (21, 21') of a cylinder (14, 14') in which an engageable and disengageable piston (15, 15') is located between the primary chamber (20, 20') and the secondary chamber (21, 21'), said piston being used to conduct the oil from a low pressure side of the variator (2, 2') to a high pressure side of the same under pressure, when the variator is displaced.

2. Continuously variable transmission as per claim 1, **characterized in that** the oil conducted from the low pressure side to the high pressure side of the variator (2, 2') under pressure by means of the piston (15, 15') corresponds to a displacement pressure which is necessary in addition to a contact pressure.

3. Continuously variable transmission as per claim 1 or 2, **characterized in that** the piston (15, 15') is configured as a step piston on each of its effective sides (16A, 16A', 16B, 16B', 17A, 17A', 17B, 17B') and is mounted between two working chambers (18, 18', 19, 19') that can be pressurized for the purpose of its hydraulic engagement and disengagement.

4. Continuously variable transmission as per claim 3, **characterized in that** the pressure chamber (12) of the primary taper disk (5) is permanently connected to the primary chamber (20) and the pressure chamber (13) of the secondary taper disk (6) is permanently connected to the secondary chamber (21) of the cylinder (14).

5. Continuously variable transmission as per claim 3 or 4, **characterized in that** the working chamber (18) bordering the primary chamber (20) is connected to the pressure line (9) leading to the pressure chamber (13) of the secondary taper disk (6) by means of a pressure regulating device (25).

6. Continuously variable transmission as per claim 3, 4 or 5, **characterized in that** the working chamber (19) bordering the secondary chamber (21) is connected to the pressure line (8) leading to the pressure chamber (12) of the primary taper disk (5) by means of a pressure regulating device (27).

7. Continuously variable transmission as per claim 5 or 6, **characterized in that** the pressure regulating device (1) has a quantity control valve (28, 29).

8. Continuously variable transmission as per claim 7, **characterized in that** the pressure regulating device (1) has an orifice (30, 31) located in each of the pressure lines (8, 9) leading to the pressure chambers (12, 13), said orifices switching over in such a way when a predefined oil volume flow is exceeded that oil flows to the assigned quantity control valve (28, 29).

9. Continuously variable transmission as per claim 3, **characterized in that** the pressure chamber (12') of the primary taper disk (5') can be connected to the primary chamber (20') and the pressure chamber (13') of the secondary taper disk (6') can be connected to the secondary chamber (21') of the cylinder (14') and the working chambers (18', 19') of the piston (15') can be connected with at least one of the pressure lines (8', 9') leading to the pressure chambers (12', 13') by means of a control valve (34).

10. Continuously variable transmission as per claim 9, **characterized in that** the control valve (34) is configured as a 7/3-way valve with connections (39, 40) leading to each of the working chambers (18', 19') of the piston (15), connections (35, 37) leading to each of the pressure chambers (12', 13') of the primary taper disk (5') and the secondary taper disk (6'), connections (36, 38) leading to the primary chamber (20') and the secondary chamber (21') and a connection (43) for a line (44) which branches from the pressure line (8') leading to the pressure chamber (12') of the primary taper disk (5'), in which a first position is intended as a rest position, a second position for conducting oil from the primary side to the secondary side under pressure and a third position for conducting oil from the secondary side to the primary side under pressure.

11. Continuously variable transmission as per claim 9 or 10, **characteriz ed in that** the cylinder (14') contains a spring device (47) which holds the piston (15') in a rest position, at least approximately in a center position.

12. Continuously variable transmission as per claim 11, **characterized in that** the spring device (47) has two springs (48, 49), of which one is located in the primary chamber (20') and the other is located in the secondary chamber (21') with pretension.

## Revendications

1. Transmission à élément enroulé pour un véhicule automobile, comprenant un variateur (2, 2') comportant un jeu de poulies primaires (3, 3') et un jeu de poulies secondaires (4, 4') dans lequel une poulie conique primaire (5, 5') et une poulie conique secondaire (6, 6') qui peuvent être déplacées hydrauliquement en translation dans la direction axiale, peuvent être sollicitées chacune, pour l'établissement réglé d'une pression, avec un débit volumique d'huile par l'intermédiaire d'un dispositif d'alimentation en pression à commande électro-hydraulique (1, 1'), **caractérisée en ce que** les débits volumiques d'huile sont amenés aux poulies coniques (5, 5', 6, 6'), pour chacune par l'intermédiaire d'une conduite de pression (8, 8', 9, 9') équipée d'au moins un dispositif de réglage de la pression (10, 10', 11, 11') et d'une chambre de pression (12, 12', 13, 13') ayant un volume variable (V1, V2) et la chambre de pression (12, 12') de la poulie conique primaire (5, 5') et la chambre de pression (13, 13') de la poulie conique secondaire (6, 6') peuvent être reliées respectivement à une chambre primaire (20, 20') et à une chambre secondaire (21, 21') d'un cylindre (14, 14') dans lequel, entre la chambre primaire (20, 20') et la chambre secondaire (21, 21') est disposé un piston (15, 15') pouvant être commuté pour l'acheminement de pression d'huile d'un côté basse pression à un côté haute pression du variateur (2, 2') lorsque ce dernier est manoeuvré.

2. Transmission à élément enroulé selon la revendication 1, **caractérisée en ce que** la pression d'huile envoyée du côté basse pression au côté haute pression du variateur (2, 2') par l'intermédiaire du piston (15, 15') correspond à une pression de manoeuvre qui est nécessaire en supplément d'une pression d'application.

3. Transmission à élément enroulé selon la revendication 1 ou 2, **caractérisée en ce que** le piston (15, 15') est réalisé, sur chacun de ses côtés actifs (16A, 16A', 16B, 16B', 17A, 17A', 17B, 17B') sous la forme d'un piston étagé qui est monté, pour sa commutation hydraulique, entre deux chambres de travail (18, 18', 19, 19') pouvant être chargées par une pression.

4. Transmission à élément enroulé selon la revendication 3, **caractérisée en ce que** la chambre de pression (12) de la poulie conique primaire (5) et la chambre de pression (13) de la poulie conique secondaire (6) sont respectivement reliées durablement à la chambre primaire (20) et à la chambre secondaire (21) du cylindre (14).

5. Transmission à élément enroulé selon la revendication 3 ou 4, **caractérisée en ce que** la chambre de travail (18) qui est adjacente à la chambre primaire (20) est reliée, par l'intermédiaire d'un dispositif de réglage de la pression (25), à une conduite de pression (9) qui mène à la chambre de pression (13) de la poulie conique secondaire (6).

6. Transmission à élément enroulé selon la revendication 3, 4 ou 5, **caractérisée en ce que** la chambre de travail (19) qui est adjacente à la chambre secondaire (21) est reliée, par l'intermédiaire d'un dispositif de réglage de la pression (27), à une conduite de pression (8) qui mène à la chambre de pression (12) de la poulie conique primaire (5).

7. Transmission à élément enroulé selon la revendication 5 ou 6, **caractérisée en ce que** le dispositif de réglage de la pression (1) comporte une soupape de réglage de la quantité (28, 29).

8. Transmission à élément enroulé selon la revendication 7, **caractérisée en ce que** le dispositif de réglage de la pression (1) comporte un étranglement (30, 31) qui est disposé dans la conduite de pression (8, 9) menant à la chambre de pression correspondante (12, 13) et, lors d'un dépassement d'un débit volumique d'huile préalablement défini, il est commuté de manière que de l'huile s'écoule vers la soupape de réglage de quantité correspondante (28, 29).

9. Transmission à élément enroulé selon la revendication 3, **caractérisée en ce que** la chambre de pression (12') de la poulie conique primaire (5') est reliée à la chambre primaire (20') et la chambre de pression (13') de la poulie conique secondaire (6') est reliée à la chambre secondaire (21') du cylindre (14'), de même que les chambres de travail (18', 19') du piston (15') peuvent être reliées à au moins une des conduites de pression (8', 9') menant aux chambres de pression (12', 13') par l'intermédiaire d'une soupape de commande (34).

10. Transmission à élément enroulé selon la revendication 9, **caractérisée en ce que** la soupape de commande (34) est constituée par un distributeur 7/3 comprenant des raccordements (39, 40) menant respectivement aux chambres de travail (18', 19') du piston (15'), des raccordements (37, 37') menant respectivement aux chambres de pression (12', 13') de la poulie conique primaire (5') et de la poulie conique secondaire (6'), des raccordements (36, 38) menant à la chambre primaire (20') et à la chambre secondaire (21') et un raccordement (43) pour une conduite (44) qui est piquée sur la conduite de pression (8') qui mène à la chambre de pression (12') de la poulie conique primaire (5'), une première position étant prévue comme position de repos et une deuxième position étant prévue pour l'envoi de l'huile sous pression du côté primaire au côté secondaire et une troisième position pour l'envoi de la pression d'huile du côté secondaire au côté primaire.

11. Transmission à élément enroulé selon la revendication 9 ou 10, **caractérisée en ce que**, dans le cylindre (14') est agencé un dispositif à ressort (47) qui maintient le piston (15') dans un état de repos qui est au moins proche d'une position moyenne.

12. Transmission à élément enroulé selon la revendication 11, **caractérisée en ce que** le dispositif à ressort (47) est réalisé avec deux ressorts (48, 49), dont l'un est disposé précontraint dans la chambre primaire (20') et l'autre dans la chambre secondaire (21').
